# EUROPEAN PATENT SPECIFICATION

(11) **EP 2 039 804 B1**
(45) Date of publication and mention of the grant of the patent: **02.05.2012**
(21) Application number: 08021521.3
(22) Date of filing: 27.05.2004
(51) Int. Cl.: C23G 5/06, C23F 11/14, C09D 5/08, E21B 41/02, C23G 1/14

(54) **Use of quaternary ammonium carbonates and bicarbonates in anticorrosive coatings of metal substrates**
Verwendung von quartären Ammoniumcarbonaten und -bicarbonaten in Korrosionsschutzschichten von Metallsubstraten
Utilisation des carbonates et bicarbonates d ammonium quaternaires dans les revetements anti corrosion de substrats metalliques

(30) Priority: 28.05.2003 US 474081 P
(43) Date of publication of application: 25.03.2009
(62) Divisional of application: 04739384.8
(73) Proprietor: LONZA, INC., Allendale, NJ 07401-1613 (US)
(72) Inventor: Chiang, Michael Y., NJ 08822-3306, (US); Hall, Larry K., Easton PA 10-5436 (US); Kimler, Joseph, Yardville NJ 08620-2601 (US); Scheblein, Joseph W., Flemington NJ 08822-9016 (US)
(74) Representative: Riegler, Norbert Hermann

(56) References cited:
- EP-A- 1 245 590
- JP-A- 2000 212 535
- US-A- 3 121 091
- US-A- 5 438 034

## Description

The present invention relates to

an anti-corrosive coating for metal substrates. The coating includes at least one quaternary ammonium carbonate, bicarbonate, or a mixture thereof, and a coating material. Typically, the quaternary ammonium carbonate, bicarbonate or a mixture thereof is dispersed in the coating material. According to a preferred embodiment, the coating also exhibits antimicrobial efficacy. The coating may include an antimicrobial effective amount of the anti-corrosive quaternary ammonium carbonate, bicarbonate, or mixture thereof or of a different antimicrobial agent.

Yet another embodiment is a metal substrate having the anticorrosive coating of the present invention on a surface thereof.

US 3 121 091 A discloses quaternary ammonium salts of sulfurous, nitrous and carbonic acid and quaternary salts of several nitrogen heterocycles and their noncorrosive properties.

US 5 438 034 A discloses quaternary ammonium carbonates and bicarbonates as wood preservatives.

EP 1 245 590 A1 discloses curable coating compositions suitable as top coatings for automobiles. The compositions contain basic catalysts such as quaternary ammonium carbonates.

JP 2000-212535 A discloses antistatic pressure-sensitive adhesives comprising quaternary ammonium salts of carbonic acid monoalkyl or monoaryl esters.

Quaternary ammonium carbonates useful in the present invention are those having the formula: 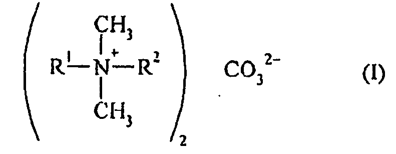 wherein R¹ and R² are each independently a C₁₋₂₀ alkyl group or an aryl-substituted C₁₋₂₀ alkyl group (e.g., a benzyl group). R¹ and R² may be the same or different.

The term "aryl-substituted alkyl group" refers to an alkyl group substituted by one or more aromatic carbon rings, in particular phenyl rings, such as phenylethyl (the alkyl group being bound to the nitrogen atom) or benzyl. Similarly, the term "aryl-substituted C₁₋₂₀ alkyl group" refers to a C₁₋₂₀ alkyl group substituted by one or more aromatic carbon rings.

The term "C_{*n*-*m*} alkyl group" (for example, "C₁₋₂₀ alkyl group") refers to any linear or branched alkyl group having from *n* to *m* (for example, from 1 to 20) carbon atoms.

According to one embodiment, R¹ and R² are C₄₋₂₀ alkyl or aryl-substituted C₄₋₂₀ alkyl groups. According to a preferred embodiment, R¹ is a C₈₋₁₂ alkyl or aryl-substituted C₈₋₁₂ alkyl group. A more preferred quaternary ammonium carbonate is didecyldimethylammonium carbonate, such as di-*n*-dccyldimethylammonium carbonate.

Didecyldimethylammonium carbonate is available as a 50 percent by weight solution in water containing 4 percent or less by weight of an alcohol, such as methanol or ethanol. The solution is a yellow/orange liquid that has a slightly fruity odor.

Suitable quaternary ammonium bicarbonates are those having the formula: 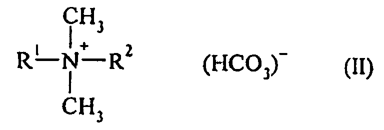 wherein R¹ and R² have the meanings and preferred meanings as defined above for the quarternary ammonium carbonates (I).

A preferred quaternary ammonium bicarbonate is didecyldimethylammonium bicarbonate, such as di-n-decyldimethylammonium bicarbonate.

The aforementioned quaternary ammonium carbonates and bicarbonates can be prepared by methods known in the art, such as those described in U.S. Patent No. 5,438,034 and International Publication No. WO 03/006419.

The quaternary ammonium carbonates and bicarbonates are in equilibrium. The concentrations of bicarbonates and carbonates vary depending on the pH of the solution in which they are contained.

In a preferred embodiment, R¹ and R² in the quaternary ammonium carbonates (I) and/or bicarbonates (II) denote the same C₁₋₂₀ alkyl group.

In a more preferred embodiment, R¹ and R² in the quaternary ammonium carbonates (I) and/or bicarbonates (II) denote C₁₀ alkyl groups, most preferably *n*-C₁₀ alkyl groups.

In another preferred embodiment, R¹ in the quaternary ammonium carbonates (I) and/or bicarbonates (II) denotes a methyl group. More preferably, both R¹ and R² denote a methyl group.

In still another preferred embodiment, R¹ in the quaternary ammonium carbonates (I) and/or bicarbonates (II) denotes a benzyl or phenylethyl group.

Unlike traditional quaternary ammonium chlorides, the carbonate and bicarbonate based quaternary ammonium compounds described herein not only have low corrosion properties, but act as corrosion inhibitors.

The carbonates and bicarbonates are miscible in water in all concentrations, have high oil solubility, and have a high affinity for metal surfaces. In addition, the carbonates and bicarbonates increase the solubility of oils, such as fragrance oils and lipophilic substances, in aqueous solutions.

Suitable solvents for the quaternary ammonium carbonates and bicarbonates include polar solvents (such as water and water-miscible polar solvents), glycols, glycol ethers (such as propylene glycol) and mixtures thereof.

Without wishing to be bound by any particular theory, it is believed that the quaternary ammonium carbonate/bicarbonate compounds described herein have a natural affinity for the metal, since they also act as cationic surfactants, and therefore migrate to the surface of the metal. Once at the surface, the quaternary ammonium carbonate/bicarbonate blocks oxygen and/or air from causing further oxidation of the metal surface.

In preferred embodiments, the metal substrate is selected from the group consisting of steel, cast iron, aluminum, metal alloys, and combinations thereof.

The anti-corrosive quaternary ammonium carbonates, bicarbonates, and mixtures thereof are incorporated into anti-corrosive coatings for metal substrates. The coatings of the present invention include a coating material. Preferably, the quaternary ammonium carbonate, bicarbonate, or mixture thereof is dissolved or dispersed in the coating material.

Suitable coating materials include, but are not limited to, organic resins, such as epoxy resins, urethane resins, vinyl resins, butyral resins, phthalic acid resins, curable resins, such as isocyanate and butadiene resins, as well as traditional coatings, such as varnishes, low VOC solvent coatings based on polyurethanes, and water-based coatings such as rosin fatty acid vinylic emulsions. The coating may be formed by methods known in the art.

The coatings of the present invention may be, for example, paints, primers, and industrial coatings.

Additional ingredients that may be present in the coating include, but are not limited to, UV stabilizers, curing agents, hardening agents, flame retardants, and mixtures thereof.

The following examples illustrate the all parts and percentages are given by weight unless otherwise stated.

### Reference Example 1

Cold rolled steel coupons (mild steel coupons of 0.813×25.4×76.2 mm³ (0.032"×1"×3") dimensions (Q-Panel Lab Products, Cleveland OH)) were fully submerged in either deionized water or tap water, and in either deionized water containing 100 or 1000 ppm of didecyldimethylammonium carbonate/bicarbonate (DDACB) mixture or tap water containing 100 or 1000 ppm of didecyldimethylammonium carbonate/bicarbonate mixture in 120 ml (4 oz.) glass jars with screw-on caps. Each solution was tested with two coupons (coupons 1-10 and A-J, respectively). After one week, the coupons were removed, rinsed with either deionized or tap water and brushed lightly with a soft nylon brush. The coupons were then dried under a stream of nitrogen and weighed. The results are set forth in Table 1 below. Differences in weight are expressed as (-) for weight loss, or (+) for weight gain. All weight differences are given in percent, based on the original weight of the respective coupon.

**Table 1**

| **Sample** | **Coupon** | **pH** | **Wt. [g] (before)** | **Wt. [g] (after)** | **% Wt. change** |
|---|---|---|---|---|---|
| DI water | 1 | 8.6 | 12.6248 | 12.6193 | -0.044 |
| | A | | 12.6521 | 12.6463 | -0.046 |
| DI water + 100 ppm DDACB | 2 | 9.1 | 12.6161 | 12.6112 | -0.039 |
| | B | | 12.5611 | 12.5555 | -0.045 |
| Di water + 1000 ppm DDACB | 3 | 8.3 | 12.5870 | 12.5873 | +0.002 |
| | C | | 12.5824 | 12.5824 | ±0.000 |
| DI water + 100 ppm DDACB | 4 | 9.1 | 12.7384 | 12.7385 | +0.001 |
| | D | | 12.6235 | 12.6185 | -0.040 |
| Di water + 1000 ppm DDACB | 5 | 8.9 | 12.7594 | 12.7596 | +0.002 |
| | E | | 12.6350 | 12.6351 | +0.001 |
| Tap water | 6 | 7.1 | 12.6807 | 12.6735 | -0.057 |
| | F | | 12.5739 | 12.5667 | -0.057 |
| Tap water + 100 ppm DDACB | 7 | 7.2 | 12.7034 | 12.6969 | -0.051 |
| | G | | 12.5835 | 12.5770 | -0.052 |
| Tap water + 1000 ppm DDACB | 8 | 7.5 | 12.6561 | 12.6564 | +0.002 |
| | H | | 12.5933 | 12.5935 | +0.002 |
| Tap water + 100 ppm DDACB | 9 | 7.3 | 12.6553 | 12.6476 | -0.061 |
| | I | | 12.6930 | 12.6868 | -0.049 |
| Tap water + 1000 ppm DDACB | 10 | 7.4 | 12.6675 | 12.6674 | -0.001 |
| | J | | 12.5273 | 12.5284 | +0.009 |

As shown in Table 1, solutions containing 1000 ppm of didecyldimethylammonium carbonate/bicarbonate did not degrade after 1 week, as evidenced by essentially no loss in weight of the metal coupon. No sediment formation was observed for these samples. The other test solutions became brown and showed sediment on the bottom of the glass jar. Corrosion was observed on the cold rolled steel coupon exposed to deionized water after one hour, while no corrosion was observed on the coupon exposed to deionized water containing 1000 ppm of the didecyldimethylammonium carbonate/bicarbonate after one week.

### Reference Example 2

Deionized water (58.2% w/w), surfactant (octyldimethylamine oxide (40% active), FMB-A08^{®}, Lonza, Inc., Allendale, NJ) (8.0% w/w) and a 50% aqueous solution of a quaternary compound (didecyldimethylammonium chloride (DDAC), or didecyldimethylammonium carbonate/bicarbonate mixture (DDACB)) (33.8% w/w) were mixed together.

A 1:256 dilution of the mixture (660 ppm active quaternary ammonium compound) in water was used to assess the corrosion inhibition properties of DDAC and DDACB. Cold rolled steel plates (steel coupons of 0.813×25.4×76.2 mm³(0.032"×1"×3") dimensions (Q-Panel Lab Products, Cleveland OH)) were immersed in each of the aqueous solutions and monitored, at room temperature, for a period of nine months.

After standing at room temperature in the aqueous solutions for 90 minutes and 30 days, respectively, the plate in the DDAC solution had started to corrode, after only 90 minutes, and was badly corroded after 30 days. In contrast, the plate in DDACB showed no corrosion whatsoever, even after 30 days.

After standing at room temperature in the aqueous solutions for a total of 9 months, the plate in the DDACB solution showed no corrosion, whilst the plate in the DDAC solution was fully corroded. For comparison purposes, a piece of identical cold rolled steel was soaked in deionized (DI) water containing no quaternary ammonium compound. Even after only 5 hours in DI water, the plate showed some signs of corrosion.

## Claims

1. An anti-corrosive coating for a metal substrate comprising
(a) at least one quaternary ammonium carbonate having the formula 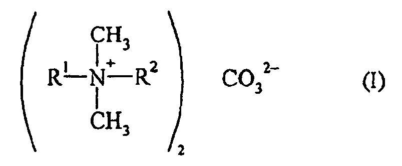 wherein R¹ is an optionally aryl-substituted C₁₋₂₀ alkyl group, and R² is an optionally aryl-substituted C₁₋₂₀ alkyl group, or
quaternary ammonium bicarbonate having the formula, 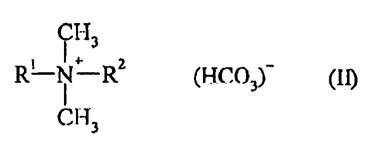 wherein R¹ is an optionally aryl-substituted C₁₋₂₀ alkyl group, and R² is an optionally arylsubstituted C₁₋₂₀ alkyl group,
or a mixture thereof; and
(b) a coating material selected from the group consisting of epoxy resins, urethane resins, vinyl resins, butyral resins, phthalic acid resins, isocyanate resins, butadiene resins, varnishes, low VOC solvent coatings based on polyurethanes, and water-based coatings such as rosin fatty acid vinylic emulsions.

2. The anti-corrosive coating of claim 1, wherein R¹ and R² are the same C₁₋₂₀ alkyl groups.

3. The anti-corrosive coating of claim 1 or 2, wherein R¹ and R² are C₁₀ alkyl groups.

4. The anti-corrosive coating of claim 3, wherein R¹ and R² are n-C₁₀ alkyl groups.

5. The anti-corrosive coating of claim 3, wherein the quaternary ammonium carbonate is didecyldimethylammonium carbonate and the quaternary ammonium bicarbonate is didecyldimethylammonium bicarbonate.

6. The anti-corrosive coating of claim 1, wherein R¹ is methyl.

7. The anti-corrosive coating of claim 6, wherein R¹ and R² are methyl.

8. The anti-corrosive coating of claim 1, wherein R¹ is benzyl or phenylethyl.

9. The anti-corrosive coating of any of claims 1 to 8, wherein the quaternary ammonium carbonate, bicarbonate, or mixture thereof is dispersed in the coating material.

10. The anti-corrosive coating of any of claims 1 to 9, further comprising at least one additional ingredient selected from UV stabilizers, curing agents, hardening agents, flame retardants, and mixtures thereof.

11. A metal substrate having the anti-corrosive coating of any of claims 1 to 10 on at least one surface thereof.

## Patentansprüche

1. Korrosionsschutzbeschichtung für ein Metallsubstrat, umfassend
(a) wenigstens ein quartäres Ammoniumcarbonat der Formel 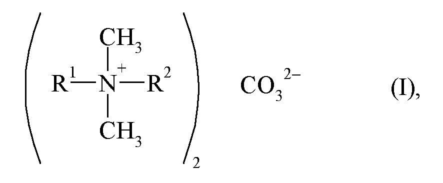 worin R¹ eine gegebenenfalls arylsubstituierte C₁₋₂₀-Alkylgruppe und R² eine gegebenenfalls arylsubstituierte C₁₋₂₀-Alkylgruppe ist, oder
quartäres Ammoniumbicarbonat der Formel 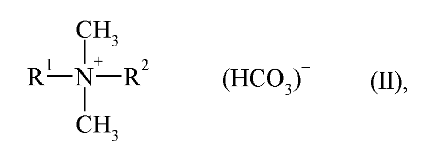 worin R¹ eine gegebenenfalls arylsubstituierte C₁₋₂₀-Alkylgruppe und R² eine gegebenenfalls arylsubstituierte C₁₋₂₀-Alkylgruppe ist,
oder ein Gemisch der Genannten; und
(b) ein Beschichtungsmaterial ausgewählt aus der Gruppe bestehend aus Epoxidharzen, Urethanharzen, Vinylharzen, Butyralharzen, Phthalsäureharzen, Isocyanatharzen, Butadienharzen, Firnissen, Beschichtungen mit niedrigem Gehalt an flüchtigen organischen Verbindungen auf Basis von Polyurethanen, und Beschichtungen auf Wasserbasis wie Kolophonium-Fettsäure-Vinyl-Emulsionen.

2. Korrosionsschutzbeschichtung nach Anspruch 1, worin R¹ und R² die gleichen C₁₋₂₀-Alkylgruppen sind.

3. Korrosionsschutzbeschichtung nach Anspruch 1 oder 2, worin R¹ und R² C₁₀-Alkylgruppen sind.

4. Korrosionsschutzbeschichtung nach Anspruch 3, worin R¹ und R² *n*-C₁₀-Alkylgruppen sind.

5. Korrosionsschutzbeschichtung nach Anspruch 3, worin das quartäre Ammoniumcarbonat Didecyldimethylammoniumcarbonat und das quartäre Ammoniumbicarbonat Didecyldimethylammoniumbicarbonat ist.

6. Korrosionsschutzbeschichtung nach Anspruch 1, worin R¹ Methyl ist.

7. Korrosionsschutzbeschichtung nach Anspruch 6, worin R¹ und R² Methyl sind.

8. Korrosionsschutzbeschichtung nach Anspruch 1, worin R¹ Benzyl oder Phenylethyl ist.

9. Korrosionsschutzbeschichtung nach einem der Ansprüche 1 bis 8, worin das quartäre Ammoniumcarbonat, -bicarbonat, oder Gemisch der Genannten im Beschichtungsmaterial dispergiert ist.

10. Korrosionsschutzbeschichtung nach einem der Ansprüche 1 bis 9, welche ausserdem wenigstens einen zusätzlichen Bestandteil, ausgewählt aus UV-Stabilisatoren, Vernetzungsmitteln, Härtemitteln, Flammschutzmitteln und Gemischen der Genannten, umfasst.

11. Metallsubstrat mit der Korrosionsschutzbeschichtung gemäss einem der Ansprüche 1 bis 10 auf wenigstens einer seiner Oberflächen.

## Revendications

1. Revêtement anticorrosif pour substrat métallique, comprenant :
(a) au moins un carbonate d'ammonium quaternaire ayant la formule 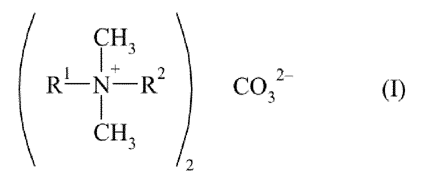 dans laquelle R¹ est un groupe alkyle en C₁₋₂₀ éventuellement à substitution aryle et R² est un groupe alkyle en C₁₋₂₀ éventuellement à substitution aryle, ou
un bicarbonate d'ammonium quaternaire ayant la formule 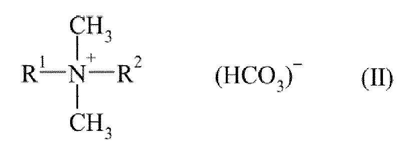 dans laquelle R¹ est un groupe alkyle en C₁₋₂₀ éventuellement à substitution aryle et R² est un groupe alkyle en C₁₋₂₀ éventuellement à substitution aryle,
ou un de leurs mélanges ; et
(b) un matériau de revêtement choisi dans le groupe constitué par les résines époxy, les résines d'uréthane, les résines de vinyle, les résines de butyral, les résines d'acide phtalique, les résines d'isocyanate, les résines de butadiène, les vernis, les revêtements en solvant à faible teneur en COV à base de polyuréthanes et les revêtements à base d'eau, tels que les émulsions vinyliques d'acide gras de colophane.

2. Revêtement anticorrosif selon la revendication 1, dans lequel R¹ et R² sont les mêmes groupes alkyle en C₁₋₂₀.

3. Revêtement anticorrosif selon la revendication 1 ou 2, dans lequel R¹ et R² sont des groupes alkyle en C₁₀.

4. Revêtement anticorrosif selon la revendication 3, dans lequel R¹ et R² sont des groupes n-alkyle en C₁₀.

5. Revêtement anticorrosif selon la revendication 3, dans lequel le carbonate d'ammonium quaternaire est le carbonate de didécyldiméthylammonium et le bicarbonate d'ammonium quaternaire est le bicarbonate de didécyldiméthylammonium.

6. Revêtement anticorrosif selon la revendication 1, dans lequel R¹ est méthyle.

7. Revêtement anticorrosif selon la revendication 6, dans lequel R¹ et R² sont méthyle.

8. Revêtement anticorrosif selon la revendication 1, dans lequel R¹ est benzyle ou phényl-éthyle.

9. Revêtement anticorrosif selon l'une quelconque des revendications 1 à 8, dans lequel le carbonate d'ammonium quaternaire, le bicarbonate ou leur mélange est dispersé dans le matériau de revêtement.

10. Revêtement anticorrosif selon l'une quelconque des revendications 1 à 9, comprenant également au moins un ingrédient supplémentaire choisi parmi les stabilisateurs UV, les agents de traitement, les agents de durcissement, les agents ignifuges et leurs mélanges.

11. Substrat métallique comprenant le revêtement anticorrosif selon l'une quelconque des revendications 1 à 10 sur au moins une de ses surfaces.
